# EUROPEAN PATENT APPLICATION

(11) **EP 3 501 872 A1**
(43) Date of publication of application: **26.06.2019**
(21) Application number: 18211115.3
(22) Date of filing: 07.12.2018
(51) Int. Cl.: B60K 17/30, B62D 5/04, B60B 11/02, B62D 7/02, B62D 7/04, B60B 35/00, B60K 7/00

(54) **NON-SCRUBBING VERTICAL DRIVE UNIT FOR A TRACKLESS OR FREE ROAMING VEHICLE WITH ZERO TURN RADIUS**

(30) Priority: 21.12.2017 US 201715851380
(71) Applicant: Disney Enterprises, Inc., Burbank, CA 91521-0158 (US)
(72) Inventor: Wach, Ryan R., Burbank, CA 91521-0158 (US)
(74) Representative: Hanna Moore + Curley

(57) **Abstract**

A driven wheel assembly to provide a zero turn radius without wheel scrubbing. The assembly includes a vertical axis motor driving a vertical drive shaft to drive first and second spaced-apart wheels that are oriented horizontally or perpendicular to the vertical drive shaft for lateral motion of the vehicle. This is combined with an off-axis vertical motor and gear, which rotates or steers, the driven wheel assembly. Instead of a right angle gear drive as found in a conventional drive unit, the driven wheel assembly employs a center differential coupled to the output end of the vertical drive shaft and a hub of each of the first and second wheels and that is positioned in the space between the two wheels. The center differential drives the first and second wheels, and each of the first and second wheels can turn at a different rotational velocity or even in opposite directions.

## Description

### BACKGROUND

### 1. Field of the Description.

The present invention relates, in general, to driven wheel assembly designs for vehicles, and, more particularly, to a vertical drive unit or, interchangeably, a driven wheel assembly that is adapted to avoid or limit scrubbing and also to provide a zero turn radius to a vehicle (which may include two or more of such driven wheel assemblies) such as trackless or free roaming vehicles in an amusement or theme park or other settings, automated guided vehicles (AGVs), and the like.

### 2. Relevant Background.

There are many applications where it is desirable for a vehicle to be able to make very sharp turns or maneuver tight corners such as with a zero or near-zero turn radius, e.g., a 90-degree turn or moving the vehicle in an orthogonal direction to the present travel direction. In some applications including many industrial settings, it may be allowable for the wheels to scrub during such sharp turns. However, there are growing numbers of applications where scrubbing is undesirable or even unacceptable due to the noises made by the tires or wheels upon scrubbing, due to the wear on the tires that scrub, and due to marks left on the floor at each turning location.

As one useful example, free roaming or trackless ride vehicles are increasingly desirable in theme parks. One particularly sought after feature is for a ride vehicle to be able to change direction without a turn radius (i.e., a zero turn radius) without scrubbing of the wheels. Presently, vertical drive units that are infinitely steerable are employed in ride vehicles to rotate the wheels and to attempt to achieve a zero turn radius. However, conventional vertical drive units cannot "turn on a dime" or provide a true zero turn radius unless the wheels are allowed to scrub. In practice or use, a vehicle with such vertical drive units is traveling in a first direction (e.g., the X direction) with the vehicle facing the same first direction may come to a stop. Then, in order to move in a second direction orthogonal to the first direction (e.g., the Y direction) from that stop (without changing the orientation of the ride vehicle), all of the wheels on the vehicle have to roll forward some distance while concurrently turning the 90 degrees to change direction in order to avoid scrubbing the wheels.

As will be apparent to those skilled in the arts, this limits the ride profile and experience that can be achieved with ride vehicles using conventional vertical drive units. Ride designers and operators as well as other designers of trackless or free roaming vehicles desire a vehicle that can be traveling in a first direction and come to a stop and then immediately begin traveling in a second direction that is orthogonal to the first direction (i.e., make up to a 90-degree turn), thereby creating a travel (or ride) path that includes a right angle and not a rounded corner as is provided by conventional vertical drive units.

In any vehicle that travels the same or a similar path through a space such as a ride vehicle, scrubbing of the wheels results in reduced wheel life, excess noise, and marking of the driving surface. All of these problems with scrubbing are undesirable and have forced operators of the vehicles to avoid or limit ride or travel paths that call for zero radius turns. Vertical drive wheel units or infinitely steerable powered wheels systems provide great maneuverability, but each presently suffers from the limitation of not being able to pivot on a vertical axis without wheel scrub on the floor or contract/driving surface.

### SUMMARY

Briefly, a vertical drive unit or driven wheel assembly is provided for use on any vehicle for which it is desirable to make zero radius (or right angle) turns. For example, a trackless or free roaming vehicle for theme park ride may include four of the new driven wheel assemblies to follow a ride path with one or more right angle turns. Each driven wheel assembly is configured to allow for pivoting or rotating the drive wheels on a vertical axis without wheel scrub to achieve a zero turn radius.

More particularly, a driven wheel apparatus or assembly is provided for use in a vehicle to provide a zero turn radius without wheel scrubbing. The assembly includes a vertical drive motor and a drive shaft driven to rotate about a vertical drive axis by the vertical drive motor. The assembly also includes a differential coupled to an output end of the drive shaft and a first wheel and a second wheel each coupled to the differential (e.g., to the outputs or side gears of the differential). The differential is positioned between the first and second wheels (such as with wheel spacing in the range of 1 to 6 inches or 0.5 to 2 inches greater than an outer diameter (OD) of the drive shaft that extends between the first and second wheels). The first and second wheels rotate about a wheel rotation axis that is orthogonal to the vertical drive axis.

In some embodiments, the differential is configured such that the first and second wheels are independently rotatable at matching or differing rotation velocities. In the same or other embodiments, due to the differential design/configuration, the first and second wheels can rotate in a matching rotation direction about the wheel rotation axis or in opposite rotation directions about the wheel rotation axis. To avoid or minimize scrub, the differential is configured to allow the first and second wheels to rotate in different directions about the wheel rotation axis when the draft shaft is stopped from rotating about the vertical drive axis (or the shaft is not rotating or being driven during steering to perform a sharp turn such as a 90-degree turn). To this end, the differential may be implemented as an open differential, and the first and second wheels are mechanically coupled to first and second outputs (such as side gears or the like via smaller drive shafts/axles) of the open differential. In other cases, the differential is a limited slip differential. The first and second wheels are spaced apart a distance such as a distance in the range of 1 to 6 inches.

In some embodiments, the driven wheel assembly further includes: (a) a mounting plate for attaching the driven wheel assembly to a body of the vehicle; (b) a collar pivotally coupling the vertical drive motor to the mounting plate; (c) a rotation gear mated to the collar, whereby the collar, the vertical drive motor, and the differential rotate with the rotation gear; and (d) a steering motor driving an output gear to rotate the rotation gear to steer the driven wheel assembly. In some cases, the steering motor is rigidly coupled to the mounting plate (e.g., to not move relative to the mounting plate during assembly operations) and has a vertical rotation axis parallel to (and offset some distance from) the vertical drive axis of the vertical drive motor. The assembly may then also include a wheel support extending from a lower surface of the rotation gear and pivotally supporting the first and second wheels (such as on one or more bearing components), whereby the wheel support and the first and second wheels rotate about the vertical drive axis with the rotation gear.

### BRIEF DESCRIPTION OF THE DRAWINGS

Fig. 1 is a schematic or functional block drawing of a vehicle or vehicle system that includes four driven wheel assemblies or vertical drive units of the present description, with one assembly shown in greater detail;
Fig. 2 is a side perspective view of an exemplary driven wheel assembly for use in implementing a non-scrubbing and zero turn radius vehicle such as that shown in Fig. 1;
Fig. 3 is an side or end view of the driven wheel assembly of Fig. 2;
Fig. 4 is a side perspective view of the driven wheel assembly of Figs. 2 and 3 with the second wheel and hub removed to show additional details of the assembly;
Fig. 5 is a sectional view of the driven wheel assembly of Fig. 3; and
Fig. 6 is a perspective view of one exemplary differential for use in a driven wheel assembly of the present description.

### DETAILED DESCRIPTION

The following description is directed toward trackless or free roaming vehicles configured to include two or more (e.g., four or more) vertical drive units or driven wheel assemblies that are each configured to provide the vehicle with a zero turn radius to allow the vehicle to make right angle or 90-degree turns without wheel scrubbing. Stated differently, each driven wheel assembly is non-scrubbing even when operated to provide a zero turn radius. One useful but non-limiting use for such drive wheel assemblies is ride vehicles for theme or amusement park rides in which each ride vehicle is trackless and is allowed free roaming as it follows a ride path with one or more right angles, and the non-scrubbing aspect reduces tire/wheel wear, leaves no or fewer wheel/tire marks on the ride's vehicle-contact surfaces, and limits (or even eliminates) undesirable vehicle noises during the ride.

Briefly, an exemplary driven wheel assembly includes a vertical axis motor driving or rotating a vertical drive shaft to drive first and second (or a pair of) spaced-apart wheels oriented horizontally or perpendicular to the vertical drive shaft for lateral motion of the vehicle. This is combined with an off-axis vertical motor and gear, which rotates or steers, the driven wheel assembly. Instead of a right angle gear drive as found in a conventional vertical drive unit, the driven wheel assembly employs a center differential that is coupled to the output end of the vertical drive shaft and a hub of each of the first and second wheels and that is positioned in the space between the two wheels.

The center differential drives the first and second wheels with one wheel being on either side of the differential. In this manner, no contact surface of the wheels are in-line with the vertical rotation axis or pivot axis of the driven wheel assembly (coinciding with the longitudinal axis of the vertical drive shaft). By utilizing a differential in the driven wheel unit, each of the first and second wheels can turn at a different rotational velocity or even in opposite directions, which eliminates wheel scrub even when the driven wheel unit rotates 90 degrees with the vehicle stopped. The driven wheel assembly uses a combination of proven mechanical systems and technologies to achieve a zero turn radius while being non-scrubbing, and this results in a more robust system that is cheaper to fabricate and maintain, is faster to operate, has a higher capacity for its size, and likely will have a longer life (or at least longer tire/wheel life due to reduced wear).

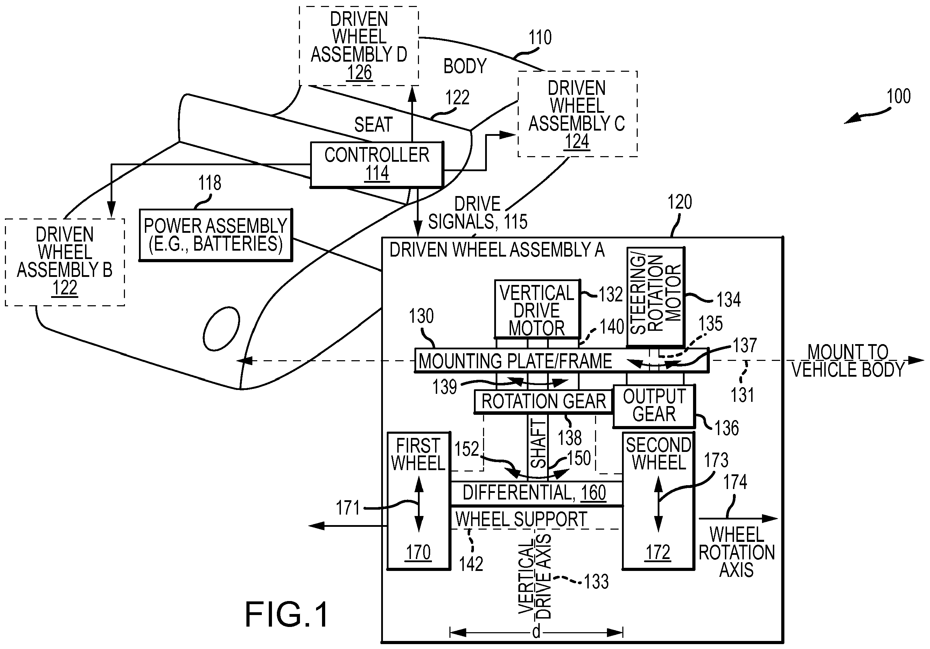

Figure 1 illustrates a vehicle or vehicle system 100 that is designed to be able to move through 90-degree or right angle turns without its wheels or tires scrubbing. The vehicle 100 may be manually steered in some cases but the vehicle 100 is particularly well suited for implementation as an autonomous trackless or free roaming vehicle as may be used in a ride of a theme park, as may be used for an AGV for travel on roads and in cities, as may be used in industrial and factory settings, and the like.

As shown, the vehicle 100 includes body 110 with a seat(s) 112 for receiving one or more passengers (not shown). The vehicle 100 also includes a controller 114, which is shown to be onboard and in wired communication with other vehicle components, but the controller 114 may communicate in a wireless manner with such components or may even be located off board in some implementations of the vehicle 100. The controller 114 may include one or more processors and run a control program, as is well-known in the autonomous vehicle industry, to generate a set of drive or control signals 115 to drive and steer the vehicle 100 in a space such as along a travel or ride path with turns of any angle including right angle turns while moving or from a stopped position. The vehicle 100 further includes a power assembly 118 that may include one or more batteries for providing electrical power to electric motors on the vehicle body 110 including drive and steering motors in any including drive wheel assemblies or vertical drive units such as assemblies 120, 122, 124, 126.

The vehicle 100 is, thus, an all-wheel drive-type vehicle with each of the drive wheel assemblies 120, 122, 124, 126 being able to be steerable and drivable, but other embodiments may only include another pair of the driven wheel assemblies (e.g., be front or rear-wheel drive vehicles) or may include additional driven wheel assemblies. Each assembly 120, 122, 124, and 126 may be configured identically or at least very similarly with assembly 120 being shown in detail and with the other assemblies 122, 124, and 126 being understood to include similar components and have similar functions and be operable concurrently and in a similar manner as the assembly 120.

The driven wheel assembly 120 includes a mounting plate or platform 130 that is attached or mounted to the body 110, e.g., rigidly fastened to the body's frame near or within a wheel well or the like. The mounting plate 130, hence, does not move relative to the body 110 and provides a stationary mounting structure for other components of the driven wheel assembly 120. The driven wheel assembly 120 further includes a vertical drive motor 132 with a vertical drive shaft 150 rotatable in either direction (as shown with arrow 152) about a vertical drive axis 133 of the assembly 120. The vertical drive motor 132 is supported via collar 140 on the mounting plate/platform 130, and the collar 140 is configured to be able to rotate or pivot about the vertical drive axis 133 relative to the mounting plate 130 during operations of the assembly 120. Particularly, the collar 140 is rigidly coupled to a rotation gear 138 at an end/side opposite the vertical drive motor 132 and it (and the motor 132) rotate with the gear 138 about the vertical drive axis 133 as shown with arrow 139.

To steer or rotate 139 the driven wheel assembly 120, a steering/rotation motor 134 is provided that is affixed to and supported upon the mounting plate 130. The steering motor 134 may be a vertical drive motor, too, with a vertical output or drive shaft 135 that extends through the plate 130 and is affixed at an outer end to an output/drive gear 136. The output/drive gear 136 may have external teeth (not shown in Figure 1) that engage or are meshed with external teeth (not shown in Figure 1) on the periphery of the rotation gear 138 such that rotation of the shaft 135 and gear 136 as shown with arrows 137 causes the rotation gear 138 to rotate 139 as well as interconnected collar 140 and vertical drive motor 132. Hence, operation of the steering/rotation motor 134 by the controller 114 via control/drive signals 115 is used during use of the vehicle 100 to steer the body 110 along a travel or ride path. The gear 138 typically has teeth about its entire periphery such that the steering motor 134 can be operated to provide infinite steering (e.g., more than 360 degrees in any direction) with rotation 137 of gear 136.

Instead of using a single wheel, the driven wheel assembly 120 includes a first wheel 170 and a second wheel 172 that are spaced apart a distance, d, from each other and supported so as to rotate in either direction as shown with arrows 171, 173 about wheel rotation axis 174 that is orthogonal to the vertical drive axis 133 (e.g., wheels 170, 127 have a horizontal rotation axis). The distance, d, is typically kept relatively small such as less than 12 inches in many cases such as in the range of 1 to 4 inches in some useful embodiments, and this spacing between wheels 170, 172 is typically chosen to be only as large as needed to provide clearance for the drive shaft 150 pass between the wheels 170, 172. The wheels 170, 172 are preferably independently rotatable 171, 173 at the same or differing speeds and even in the same or different directions about the axis 174.

To this end, a differential (or central differential) 160 is included in the driven wheel assembly 120 and is positioned between the first and second wheels 170, 172. More specifically, the differential 160 is coupled to the output/drive end of the vertical drive shaft 150 (or an input of the differential 160 engages the end of shaft 150). Additionally, the differential 160 (or its left and right outputs) are coupled to (or mechanically engages) the first and second wheels 170, 172 (e.g., a hub of each wheel 170, 172 is affixed to the differential 160) so that the wheels 170 and 172 are driven by the vertical drive motor 132 via the drive shaft 150 and the differential to rotate 171, 173 about the wheel rotation axis 174.

The differential 160 may take a wide variety of forms to implement the assembly 120 such that the wheels 170, 172 may rotate 171, 173 independent of each other (e.g., at the same speed and direction, at differing speeds but same direction, at same speed but differing directions, or at differing speeds and direction as a locked or closed differential is not utilized). For example, some embodiments use an open differential for the center differential 160 while other embodiments use a limited slip differential for the center differential 160.

The first wheel 170 and the second wheel 172 are shown to be mounted to and supported by the rotation gear 138 (e.g., rigidly affixed to a lower surface of the gear 138 in some cases) via a wheel support 142, which may provide one or more bearing surfaces for a wheel hub or otherwise pivotally support each of the wheels 170, 172 to allow rotation 171, 173 about rotation axis 174. In this manner, the first and second wheels 170, 172 are steered or rotated about the vertical drive axis 133 with rotation of the gear 138 by the steering/rotation motor 134, and no scrubbing will occur due the inclusion and operation of the center differential 160 allowing separate/independent, different, and concurrent (when needed) rotation 171, 173 of the wheels 170, 172 (e.g., with a clutch (not shown but understood) operated (e.g., disengaged) to allow independent rotation via the differential 160 in different directions at stop and then the clutch is operated (e.g., engaged) during to move the vehicle 110 after a turn at the stop).

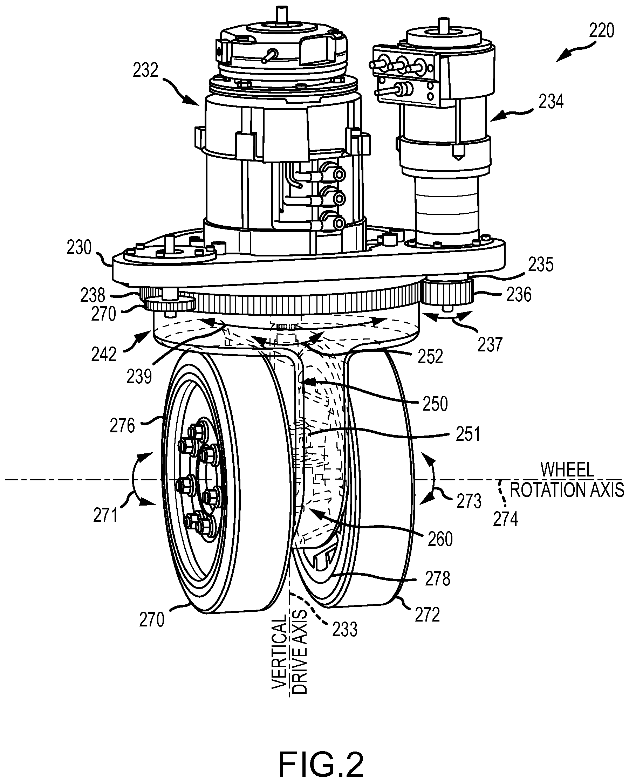

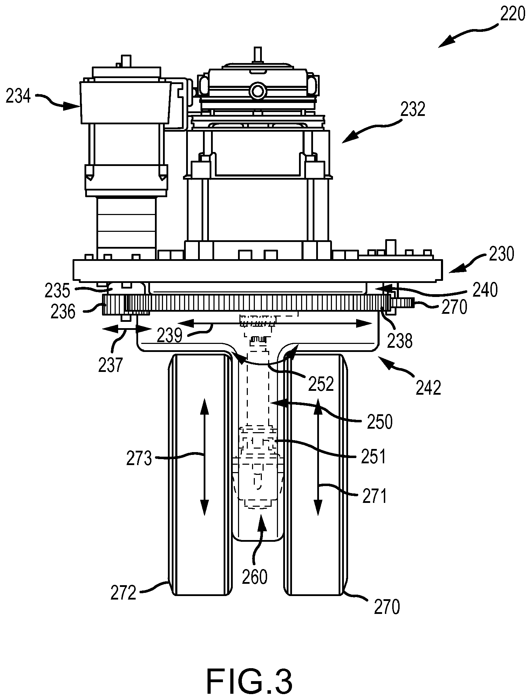

Figures 2 and 3 are side perspective and end or side views, respectively, of an exemplary driven wheel assembly or vertical drive unit 220 useful for implementing the assemblies 120, 122, 124, and 126 in the vehicle 100 of Figure 1. The driven wheel assembly 220 is configured to provide a zero turn radius and also to be non-scrubbing even during a 90-degree turn from a vehicle stop. As shown, the assembly 220 includes a mounting plate or platform 230 that would be fastened (or rigidly attached) to a vehicle body (or its frame such as near or in a wheel well) to support the assembly 220 in the vehicle and the plate 230 is stationary relative to the vehicle body during operations of the assembly 220.

The assembly 220 further includes a vertical drive motor 232 pivotally supported upon the plate/platform 230 via collar 235 so that it can rotate about a vertical drive axis 233 (e.g., rotate relative to the stationary plate 230) during steering operations of the assembly 220. The drive motor 232 is operable (in response to control signals from a vehicle controller or the like) to rotate a wheel drive shaft (or may be labeled a pinion shaft) 250 in either direction about the vertical drive axis 233 as shown with arrows 252. The vertical drive motor 232 may be implemented using a wide variety of commercially available electric motors and may have a power capacity chosen to suit the particular vehicle upon which it will be mounted. For example, vertical drive motors (e.g., direct current (DC) motors, AC motors, AC/DC motors, induction motors, and the like) manufactured and/or distributed for electric vehicles (e.g., mobile battery-powered vehicles) and other applications by Schabmueller GmbH, C.F.R. SRL, Regal Beloit Corporation, or others may be used to implement the drive motor 232.

The collar 235 is interconnected with a rotation/steering gear 238, such that the gear 238 is pivotally couple with and supported by the plate/platform 230, such as shown on a side opposite the vertical drive motor 232. The rotation/steering gear 238 is rotatable about the vertical drive axis 233, in either as shown by arrows 239, by a steering/rotation drive 234 that operates to rotate a shaft 235 to rotate (as shown by arrows 237) an output gear 236 about a second vertical axis offset from vertical drive axis 233. The steering/rotation drive 234 may take a form similar to that of motor 232 but require less power (have a lower capacity) and may be provided by the same manufacturers/distributors in some cases. The drive 234 is affixed to the plate 230 and remains stationary relative to the plate 230 during operations of the assembly 220. The output gear 236 has external teeth about its periphery that are meshed with external teeth of the steering/rotation gear 238 such that when the motor 234 is operated to rotate the shaft 235 and interconnect gear 236, the steering/rotation gear 238 is rotated as shown at 239, which causes the collar 235 and interconnected vertical drive motor 232 to rotate or be steered into a new position with infinite steering (up to or exceeding 360 degrees of rotation). An additional gear 270 may be provided opposite the output gear 236 that is freewheeling to function as a guide and/or to provide feedback to a controller (e.g., be indicative of amount of rotation of gear 238).

A wheel support 242 is attached to the lower side/surface of the rotation gear 238 so that it rotates 239 with the gear 238 in response to operations of the steering/rotation drive 234. Instead of a single wheel, the assembly 220 includes a first wheel 270 and a second wheel 272 spaced apart a distance from the first wheel 270, and the first and second wheels 270, 272 are pivotally supported upon the wheel support 242 so that they are rotated about the vertical drive axis 233 with the gear 238 to provide steering of a vehicle including the assembly 220. The pivotal mounting to the wheel support 242 is provided in some cases by supporting first and second hubs 276, 278 on bearings to allow each of the hubs 276, 278 and wheels 270, 272 mounted on these hubs 276, 278 to rotate (as shown with arrows 271, 273) about a wheel rotation axis 274, which is orthogonal to the vertical drive axis 233 (e.g., is a horizontal rotation axis).

Each of the wheels 270, 272 can rotate 271, 273 independently (or together) so that the assembly 220 in non-scrubbing. To this end, the assembly 220 includes a central differential 260 positioned between the wheels 270, 272. The wheel drive (or pinion) shaft 250 has its output end 251 coupled to the input (e.g., an input pinion) of the differential 260 to drive rotation 271, 273 of the wheels 270, 272 via the differential 260. To this end, each of the hubs 276, 278 of the first and second wheels 270, 272 is coupled to one of the first and second (or left and right) outputs of the differential 260.

The differential 260 may be implemented as an open differential such that differential outputs and coupled hubs 276, 278 and wheels 270, 272 can rotate concurrently at the same speeds, can rotate independently at the same or differing rotational velocities and in the same or different directions about rotation axis 274. Other embodiments may use other differentials, such as a limited slip differential design, that allow independent rotation of the paired wheels 270, 272. As can be seen in Figure 3, the wheels 270, 272 are separated by a distance, d (e.g., a distance large greater than an outer diameter of the drive shaft 250 such as 1 to 3 inches or more), and, as a result, none of the surfaces of the wheels 270, 272 is in line with the vertical rotation axis 233 or pivot axis (which coincides with axis 233 in the assembly 220) and by utilizing the differential 260, each wheel 270, 272 can turn 271, 273 at a different rotational velocity or even in opposite directions about axis 274, whereby wheel scrub is eliminated with assembly 220.

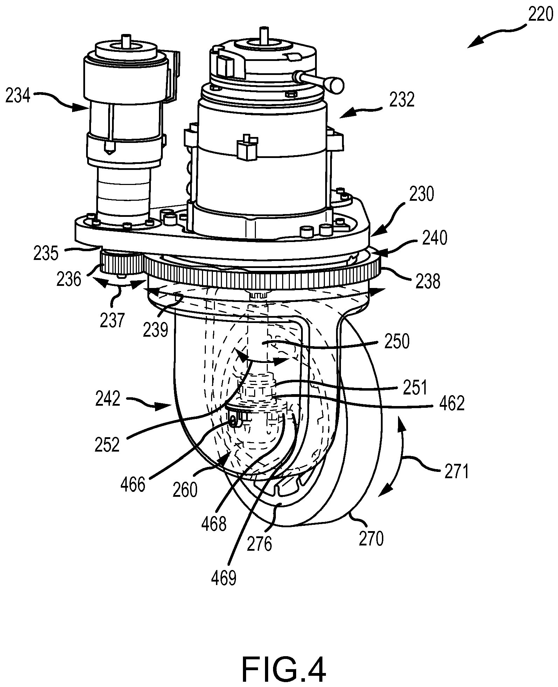

Figure 4 illustrates a side perspective view of the driven wheel assembly 220 of Figures 2 and 3 with the second wheel 272 and its hub 278 removed showing additional details of the assembly 220. Further, in this regard, the wheel support 242 is again (as with Figures 2 and 3) shown to be transparent to show features and components of the assembly 220. Particularly, Figure 4 shows in greater detail that the output end 251 of the shaft 250 that is driven by the vertical drive motor 232 mechanically engages an input (e.g., an input pinion) 462 of the differential 260 so as to input the rotation 252 of the shaft 250 into the differential 260 and, thereby, to wheel 270 (and wheel 272 (not shown in Figure 4)).

Further, as shown, the differential 260 has first and second outputs 466 and 468 (or left and right outputs), and each of these is coupled to a wheel hub 278 or 276 so that a wheel 272 or 270 rotates with that particular differential output 466 or 468. As shown, an output shaft or axle 469 is shown to rigidly affix the hub 276 of wheel 270 to the differential output 468. The outputs 466, 468 may take a variety of forms to practice the invention but may be or include side gears when the differential 260 is provided in the form of an open differential.

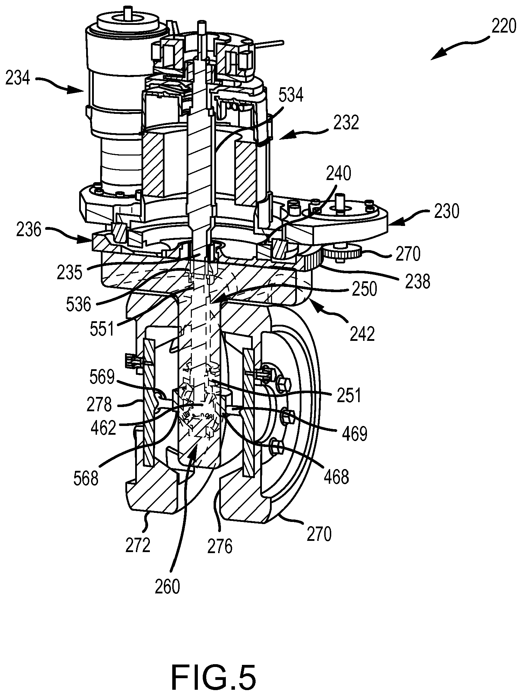

Figure 5 is a sectional view of the driven wheel assembly 220 shown in Figure 3, and this view provides additional detail of the assembly 220. For example, the second output (or side gear) 568 is shown to be rigidly connected to the inner surface of the second hub 278 via a shaft or axle 569, and this mechanical coupling causes the hub 278 to rotate with the differential output 568 along with wheel 272 (which is mounted onto the hub 278). Figure 5 also shows more clearly that the drive shaft 250 has its output end 251 attached to the differential input 462 to allow the shaft 250 to drive the differential 260 during operations of the vertical drive motor 232.

Further, to this end, the vertical drive motor 232 is shown to include an internal shaft 534 with its output end 535 coupled via collar to the input end 551 of the drive shaft 250. Hence, operations of the motor 232 drives interconnected shafts 534 and 250 to rotate together in either direction and at a desired rotation velocity about the vertical drive axis 233 of the assembly 220. The differential 260 is configured to provide this rotation along a horizontal rotation axis 274 to the two spaced-apart wheels 270, 272, which are allowed to rotate in the same or differing directions together or independently and at the same or differing rotation velocities due to the well-known operating principles of the differential 260 (e.g., an open differential, an LSM differential, or other differential design allowing separate rotation (or not closed/locked) of the wheels 270, 272).

Although the invention has been described and illustrated with a certain degree of particularity, the particular implementations described in the present disclosure has been as examples, and numerous changes in the combination and arrangement of parts can be resorted to by those skilled in the art without departing from the spirit and scope of the invention, as claimed.

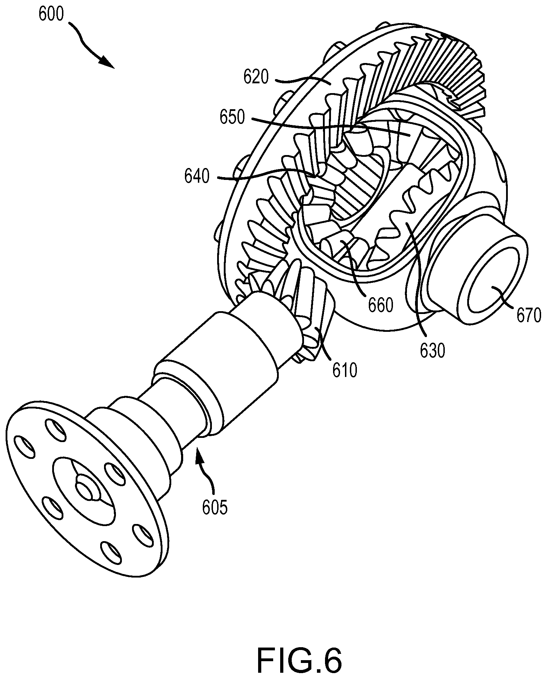

For example, a wide variety of designs may be used to implement a differential in a driven wheel assembly (e.g., for the differential 160 of the driven wheel assembly 120. One useful differential 600 is shown in Figure 6, but other designs also may be used. As shown, the differential 600 includes a carrier 670 (or gear carrier and bearing housing). The differential 600 further includes a pinion gear 610 attached to a vertical drive shaft 605, and a ring gear 620 attached to the carrier 670. The differential 600 also include a left side gear 630 that would be attached (when in a driven wheel assembly) to a left axle shaft and left wheel hub, and, similarly, the differential 600 includes a right side gear 640 that would be attached to a right axle shaft and right wheel hub. Additionally, the differential 600 includes a first spider gear 650 that rides in a bearing on carrier 670 and further includes a second spider gear 660 that rides in a bearing on carrier 670.

The present teaching may also be extended to one or more of the following numbers clauses:
1. A driven wheel apparatus for use in a vehicle to provide a zero turn radius without wheel scrubbing, comprising:
   a vertical drive motor;
   a drive shaft driven to rotate about a vertical drive axis by the vertical drive motor;
   a differential coupled to an output end of the drive shaft; and
   a first wheel and a second wheel each coupled to the differential,
   wherein the differential is positioned between the first and second wheels,
   wherein the first and second wheels rotate about a wheel rotation axis that is orthogonal to the vertical drive axis, and
   wherein the differential is configured such that the first and second wheels are independently rotatable at matching or differing rotation velocities.
2. The driven wheel apparatus of clause 1, wherein the first and second wheels rotate in a matching rotation direction about the wheel rotation axis or in opposite rotation directions about the wheel rotation axis.
3. The driven wheel apparatus of clause 1, wherein the differential is an open differential.
4. The driven wheel apparatus of clause 3, wherein the first and second wheels are mechanically coupled to first and second outputs of the open differential.
5. The driven wheel apparatus of clause 1, wherein the differential is a limited slip differential.
6. The driven wheel apparatus of clause 1, wherein the first and second wheels are spaced apart a distance in the range of 1 to 6 inches.
7. The driven wheel apparatus of clause 1, further comprising:
   a mounting plate for attaching the driven wheel assembly to a body of the vehicle;
   a collar pivotally coupling the vertical drive motor to the mounting plate;
   a rotation gear mated to the collar, wherein the collar, the vertical drive motor, and the differential rotate as a unit with the rotation gear; and
   a steering motor driving an output gear to rotate the rotation gear to steer the driven wheel assembly.
8. The driven wheel apparatus of clause 7, wherein the steering motor is rigidly coupled to the mounting plate and has a vertical rotation axis parallel to the vertical drive axis.
9. The driven wheel apparatus of clause 7, further comprising a wheel support extending from a lower surface of the rotation gear and pivotally supporting the first and second wheels, whereby the wheel support and the first and second wheels rotate about the vertical drive axis with the rotation gear.
10. The driven wheel apparatus of clause 1, wherein the differential is configured to allow the first and second wheels to rotate in different directions about the wheel rotation axis when the draft shaft is stopped from rotating about the vertical drive axis.
11. A driven wheel apparatus for a vehicle a zero turn radius and limited wheel scrubbing, comprising:
   a mounting plate for attaching the driven wheel assembly to a body of the vehicle;
   a drive motor operable to rotate a drive shaft about a vertical drive axis, wherein the drive motor is pivotally supported upon the mounting plate;
   first and second wheels rotatable about a rotation axis orthogonal to the vertical drive axis;
   a center differential disposed between, and coupled to, the first and second wheels and mated to an output end of the drive shaft to be driven by the drive motor via the drive shaft; and
   a rotation gear; and
   a steering motor operable to drive an output gear engaging the rotation gear to rotate the rotation gear to steer the driven wheel assembly including rotating the drive motor and the first and second wheels about the vertical drive axis.
12. The apparatus of clause 11, wherein the center differential is configured such that the first and second wheels are independently rotatable at matching or differing rotation velocities.
13. The apparatus of clause 11, wherein the first and second wheels rotate in a matching rotation direction about the rotation axis or in opposite rotation directions about the rotation axis.
14. The apparatus of clause 13, wherein the center differential is an open differential.
15. The apparatus of clause 14, wherein the first and second wheels are mechanically coupled to first and second outputs of the open differential.
16. The apparatus of clause 11, wherein the first and second wheels are spaced apart a distance in the range of 1 to 6 inches and wherein the center differential is configured to allow the first and second wheels to rotate in different directions about the rotation axis when the draft shaft is not driven to rotate by the drive motor.
17. A vehicle with a zero turn radius, comprising:
   a vehicle body; and
   at least on vertical drive unit comprising:
      a vertical drive motor;
      a drive shaft driven to rotate about a vertical drive axis by the vertical drive motor;
      a differential coupled to an output end of the drive shaft;
      a first wheel and a second wheel each coupled to the differential, wherein the differential is positioned between the first and second wheels, wherein the first and second wheels rotate about a wheel rotation axis that is orthogonal to the vertical drive axis, and wherein the differential is configured such that the first and second wheels are independently rotatable at matching or differing rotation velocities;
      a mounting plate attaching the vertical drive unit to the vehicle body;
      a collar pivotally coupling the vertical drive motor to the mounting plate;
      a rotation gear mated to the collar, wherein the collar, the vertical drive motor, and the differential rotate with the rotation gear; and
      a steering motor driving an output gear to rotate the rotation gear about the vertical drive axis to steer the driven wheel assembly.
18. The vehicle of clause 17, wherein the first and second wheels rotate in a matching rotation direction about the wheel rotation axis or in opposite rotation directions about the wheel rotation axis and wherein the differential is an open differential.
19. The vehicle of clause 18, wherein the first and second wheels are mechanically coupled to first and second outputs of the open differential and wherein the first and second wheels are spaced apart a distance in the range of 1 to 6 inches.
20. The vehicle of clause 17, wherein the differential is configured to allow the first and second wheels to rotate in different directions about the wheel rotation axis when the draft shaft is not being rotated about the vertical drive axis by operation of the vertical drive motor.

## Claims

1. A driven wheel apparatus for use in a vehicle to provide a zero turn radius with limited wheel scrubbing, comprising:
a vertical drive motor;
a drive shaft driven to rotate about a vertical drive axis by the vertical drive motor;
a differential coupled to an output end of the drive shaft; and
a first wheel and a second wheel each coupled to the differential,
wherein the differential is positioned between the first and second wheels,
wherein the first and second wheels rotate about a wheel rotation axis that is orthogonal to the vertical drive axis, and
wherein the differential is configured such that the first and second wheels are independently rotatable at matching or differing rotation velocities.

2. A driven wheel apparatus for use in a vehicle to provide a zero turn radius and limited wheel scrubbing, comprising:
a mounting plate for attaching the driven wheel assembly to a body of the vehicle;
a drive motor operable to rotate a drive shaft about a vertical drive axis, wherein the drive motor is pivotally supported upon the mounting plate;
first and second wheels rotatable about a rotation axis orthogonal to the vertical drive axis;
a center differential disposed between, and coupled to, the first and second wheels and mated to an output end of the drive shaft to be driven by the drive motor via the drive shaft; and
a rotation gear; and
a steering motor operable to drive an output gear engaging the rotation gear to rotate the rotation gear to steer the driven wheel assembly including rotating the drive motor and the first and second wheels about the vertical drive axis.

3. The driven wheel apparatus of claim 1 or 2, wherein the first and second wheels rotate in a matching rotation direction about the wheel rotation axis or in opposite rotation directions about the wheel rotation axis.

4. The driven wheel apparatus of any preceding claim, wherein the differential is an open differential.

5. The driven wheel apparatus of claim 4, wherein the first and second wheels are mechanically coupled to first and second outputs of the open differential.

6. The driven wheel apparatus of claim 1 or 2, wherein the differential is a limited slip differential.

7. The driven wheel apparatus of any preceding claim, wherein the first and second wheels are spaced apart a distance in the range of 2.5 cm to 15 cm (1 to 6 inches).

8. The driven wheel apparatus of claim 1, further comprising:
a mounting plate for attaching the driven wheel assembly to a body of the vehicle;
a collar pivotally coupling the vertical drive motor to the mounting plate;
a rotation gear mated to the collar, wherein the collar, the vertical drive motor, and the differential rotate as a unit with the rotation gear; and
a steering motor driving an output gear to rotate the rotation gear to steer the driven wheel assembly.

9. The driven wheel apparatus of claim 8, wherein the steering motor is rigidly coupled to the mounting plate and has a vertical rotation axis parallel to the vertical drive axis.

10. The driven wheel apparatus of claim 8, further comprising a wheel support extending from a lower surface of the rotation gear and pivotally supporting the first and second wheels, whereby the wheel support and the first and second wheels rotate about the vertical drive axis with the rotation gear.

11. The driven wheel apparatus of claim 1, wherein the differential is configured to allow the first and second wheels to rotate in different directions about the wheel rotation axis when the draft shaft is stopped from rotating about the vertical drive axis.

12. A vehicle with a zero turn radius, comprising:
a vehicle body and a driven wheel apparatus as claimed in any preceding claim.
